# EUROPÄISCHE PATENTSCHRIFT

(11) **EP 0 946 389 B1**
(45) Veröffentlichungstag und Bekanntmachung des Hinweises auf die Patenterteilung: **25.07.2001**
(21) Anmeldenummer: 97953898.0
(22) Anmeldetag: 20.12.1997
(51) Int. Cl.: B65B 5/10, B65G 47/90

(54) **VORRICHTUNG ZUM HANDHABEN VON GEGENSTÄNDEN**
DEVICE FOR HANDLING OBJECTS
DISPOSITIF DE MANIEMENT D'OBJETS

(30) Priorität: 23.12.1996 DE 19654041
(43) Veröffentlichungstag der Anmeldung: 06.10.1999
(73) Patentinhaber: Focke & Co. (GmbH & Co.), 27283 Verden (DE)
(72) Erfinder: FOCKE, Heinz, D-27283 Verden (DE); KERLE, Hanfried, C., D-38108 Braunschweig (DE); GROPP, Wolfgang, D-27299 Daverden (DE)
(74) Vertreter: Bolte, Erich, Dipl.-Ing.
(86) Internationale Anmeldenummer: EP9707222
(87) Internationale Veröffentlichungsnummer: WO9828190

(56) Entgegenhaltungen:
- BE-A- 897 194
- DE-A- 1 900 556
- DE-B- 1 611 845
- US-A- 3 174 789

## Beschreibung

Die Erfindung betrifft eine Vorrichtung zum Handhaben von Gegenständen gemäss dem Oberbegriff des Anspruchs 1.

Aus der DE-B-1611845 ist eine Vorrichtung der eingangs genannten Art zum Ein- und Auspacken von Flaschen oder ähnlichen Produkten bekannt, bei der auf einem in horizontaler Ebene verschiebbaren Trägerwagen ein Schubkurbelgetriebe angeordnet ist, welches eine mit einem Auslegerarm verbundene Koppel betätigt. Durch Verfahren des Trägerwagens und eines auf diesem angeordneten Aufsitzerwagens kann die aus Auslegerarm und Kurbel bestehende Einheit einen Flaschenhalterahmen auf und ab sowie seitwärts bewegen.

Ähnliche Vorrichtungen dienen dem Handhaben von zum Beispiel Pralinen, Kaffeebeuteln oder dergleichen. Die auf dem Zuförderer angelieferten Gegenstände sollen mit Hilfe der Vorrichtung aufgenommen und an eine Verpackung für die Gegenstände übergeben werden. Die Handhabung der Gegenstände soll selbsttätig - also ausschließlich maschinell - erfolgen.

Der Erfindung liegt die Aufgabe zugrunde, eine Vorrichtung der eingangs genannten Art dahingehend weiterzuentwickeln, dass eine hinsichtlich der Handhabungsmöglichkeiten optimale Vorrichtung zum Transportieren von Gegenständen geschaffen wird, die darüber hinaus ausreichende mechanische Stabilität aufweist.

Zur Lösung dieses Problems ist die erfindungsgemäße Vorrichtung durch folgende Merkmale gekennzeichnet:
a) je ein Schlitten ist mit einem handelsüblichen Linearantrieb verbunden,
b) die beiden parallelen Linearantriebe sind ortsfest, nebeneinander oder übereinander, angeordnet,
c) die beiden parallelen Hebel und der unter einem Winkel zu diesen angeordnete Hebel sind jeweils mit einer die Koppel bildenden. Platte gelenkig verbunden,
d) der unter einem Winkel zu den parallelen Hebeln angeordnete Hebel ist mit den Platte über ein Gelenk verbunden, das gleichachsig mit dem Gelenk des einen Hebels der parallelen Hebel positioniert ist.

Die in vorstehendem Sinne ausgebildete Vorrichtung verfügt über eine kleine, einfache Bauweise. Mit Hilfe der handelsüblichen Linearantriebe ist der Aufnahmekopf schnell verfahrbar. Die erfindungsgemäße Vorrichtung ist demnach für hohe Arbeitsgeschwindigkeiten geeignet. Darüber hinaus ist mit Hilfe einer derartigen Vorrichtung der Aufnahmekopf an eine beliebige Position im Raum verfahrbar.

Vorzugsweise sind die Linearantriebe an einem oberhalb des Zuförderers und Abförderers angeordneten, geschlossenen Rahmen derart befestigt, dass Schlitten der Linearantriebe quer zur Förderrichtung des Zuförderers und Abförderers hin- und herbewegbar sind. Der Rahmen ruht auf vertikalen Stützen, die seitlich neben dem Zuförderer und Abfördererer verlaufen. Mit einer derart ausgestalteten Vorrichtung ist demnach der Aufnahmekopf aus einer Position oberhalb des Zuförderers bis in eine Position oberhalb des Abförderers verfahrbar.

Nach einer vorteilhaften Weiterbildung der Erfindung besteht der Ausleger aus zwei parallelen, an ihren Enden jeweils gelenkig gelagerten Hebeln und mindestens einem weiteren Hebel, der unter einem Winkel zu den parallel verlaufenden Hebeln angeordnet ist. Die parallel verlaufenden Hebel sind hierbei einerseits an einem gemeinsamen Schlitten und andererseits am Aufnahmekopf gelenkig befestigt. Der weitere Hebel ist mit einem zweiten, eigenständig steuerbaren Schlitten sowie dem Aufnahmekopf gelenkig verbunden. Eine derart ausgestaltete Vorrichtung gewährleistet mit besonders einfachen konstruktiven Mitteln die beliebige Verfahrbarkeit des Aufnahmekopfs.

Bevorzugte Weiterbildungen der Erfindung ergeben sich aus den Unteransprüchen und der Beschreibung. Anhand der Zeichnung werden Ausführungsbeispiele der Erfindung näher erläutert. In der Zeichnung zeigen:
- Fig. 1: Eine erfindungsgemäße Vorrichtung zum Handhaben von Gegenständen nach einem ersten Ausführungsbeispiel der Erfindung in Vorderansicht,
- Fig. 2: ein Detail der Vorrichtung gemäß Fig. 1 im Bereich von Linearantrieben in einer Ansicht analog Fig. 1.
- Fig. 3: die Vorrichtung gemäß Fig. 1 in Draufsicht,
- Fig. 4: die Vorrichtung gemäß Fig. 1 bis 3 in Seitenansicht,
- Fig. 5: ein Detail der Vorrichtung gemäß Fig. 1 bis 4 im Bereich der Linearantriebe in einer Ansicht analog Fig. 4,
- Fig. 6: ein Vorrichtung zum Handhaben von Gegenständen nach einem zweiten Ausführungsbeispiel der Erfindung in Vorderansicht,
- Fig. 7: die Vorrichtung gemäß Fig. 6 in Draufsicht,
- Fig. 8: die Vorrichtung gemäß Fig. 6, 7 in Seitenansicht, und
- Fig. 9: ein Detail der Vorrichtung gemäß Fig. 6 bis 8 im Bereich von Linearantrieben in einer Ansicht analog Fig. 8.

Die in der Zeichnung gezeigten Ausführungsbeispiele der erfindungsgemäßen Vorrichtung beziehen sich auf das bevorzugte Anwendungsgebiet derselben, nämlich auf die Handhabung von auf einem Zuförderer angelieferten Gegenständen. Die Gegenstände werden von der erfindungsgemäßen Vorrichtung erfaßt, vom Zuförderer abgehoben und in Richtung auf einen Abförderer transportiert. Sie werden sodann an eine auf dem Abförderer positionierte Verpackung für den Gegenstand übergeben. Bei den Gegenständen handelt es sich zum Beispiel um Pralinen oder dergleichen.

Die handzuhabenden Gegenstände 10 werden von einem Zuförderer 11 angeliefert und mit Hilfe der erfindungsgemäßen Vorrichtung an einen Abförderer 12 übergeben. Der Zuförderer 11 wird auch als Produktband bezeichnet, der Abförderer 12 als Kartonband. Auf dem Abförderer 12 ist eine oben offene Verpackung 13 für die handzuhabenden Gegenstände 10 positioniert. Nach dem Übergeben der Gegenstände 10 an die Verpackung 13 wird dieselbe zu einer Verschließstation (nicht gezeigt) für die Verpackung 13 transportiert.

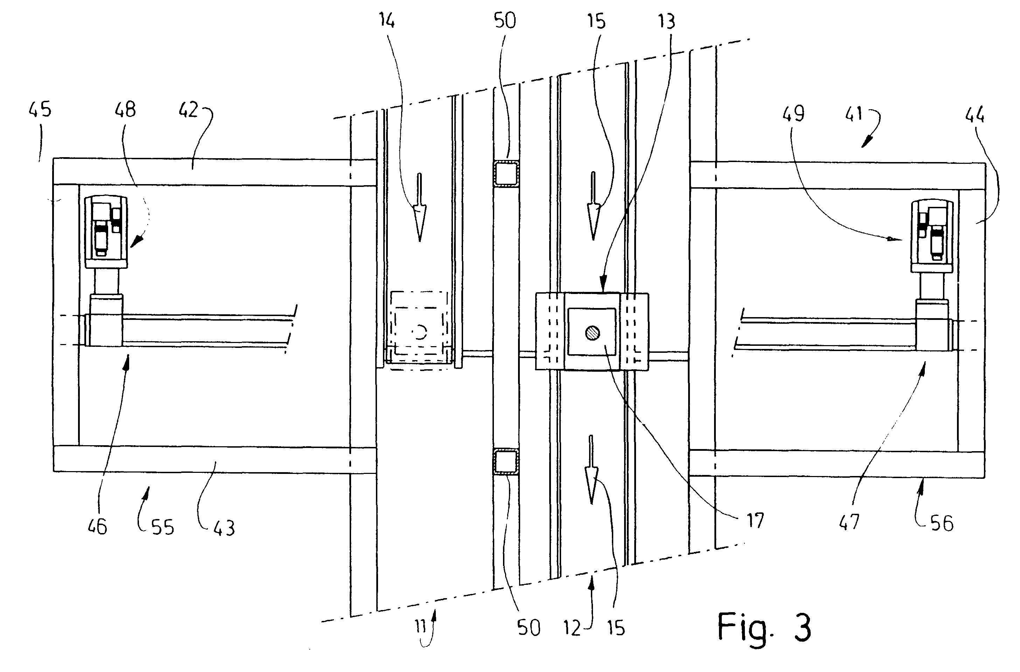

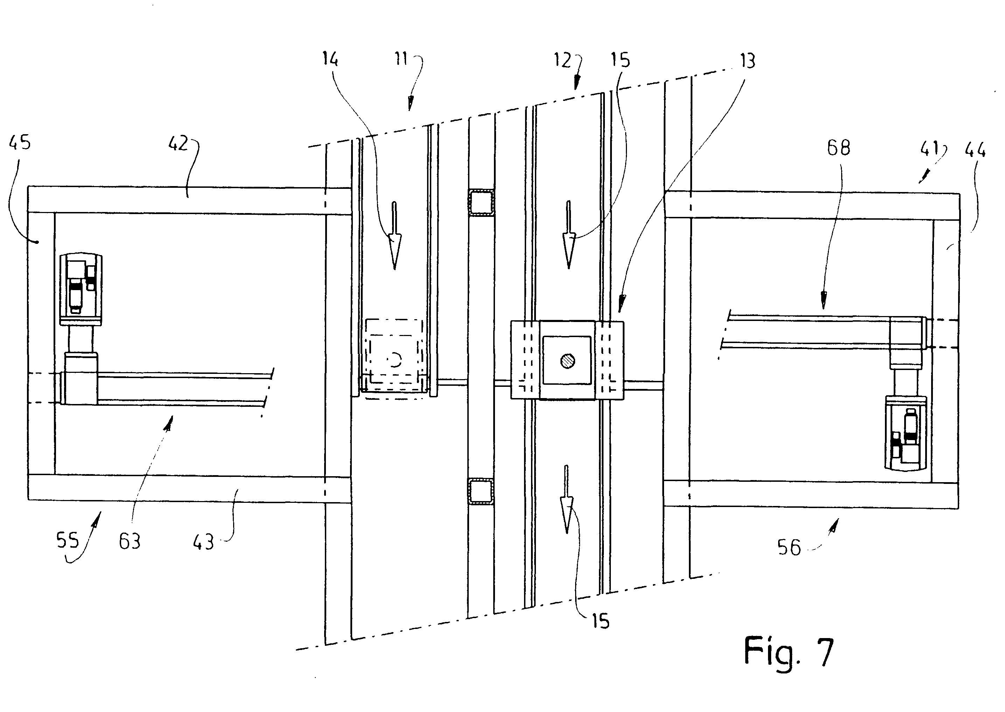

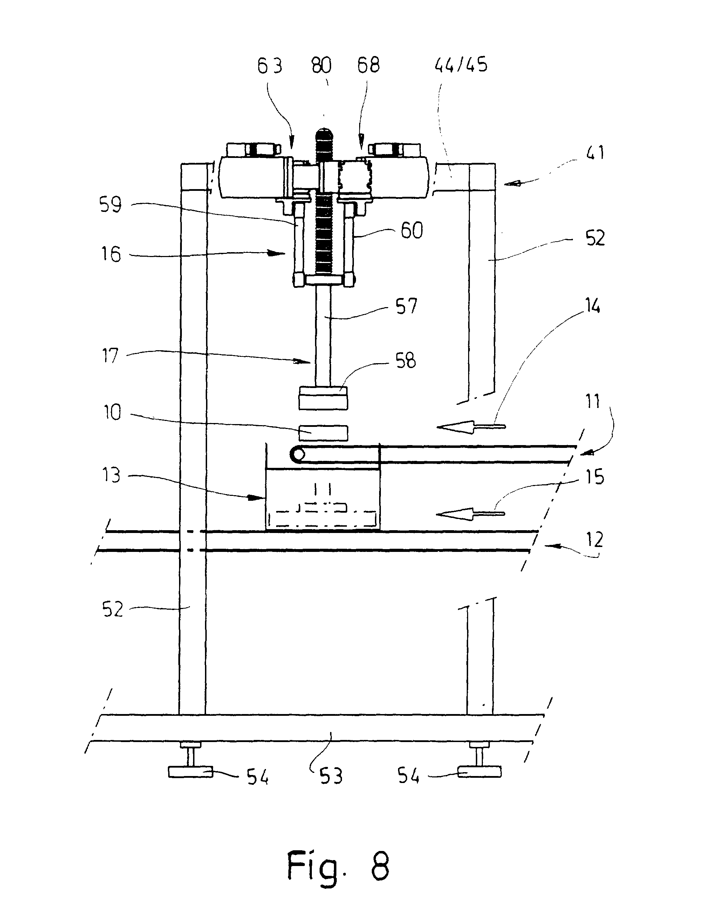

Zuförderer 11 und Abförderer 12 sind nebeneinander und in der Höhe versetzt zueinander angeordnet. Förderrichtungen von Zuförderer 11 und Abförderer 12, die in Fig. 3, 4 und 7, 8 durch Pfeile 14, 15 dargestellt sind, verlaufen parallel zueinander. Die erfindungsgemäße Vorrichtung erfüllt demnach die Aufgabe, die Gegenstände 10 quer zu den Förderrichtungen von Zuförderer 11 und Abförderer 12 zu transportieren. Zuförderer 11 und Abförderer 12 sind als Bandförderer ausgebildet.

Zur Aufnahme der Gegenstände 10 vom Zuförderer 11 und Transportieren derselben in Richtung auf den Abförderer 12 dient ein an einem Ausleger 16 angeordneter Aufnahmekopf 17. Details hinsichtlich der Ausgestaltung und Lagerung des Auslegers 16 bzw. Aufnahmekopfs 17 sollen im folgenden für die beiden Ausführungsbeispiele getrennt dargestellt werden.

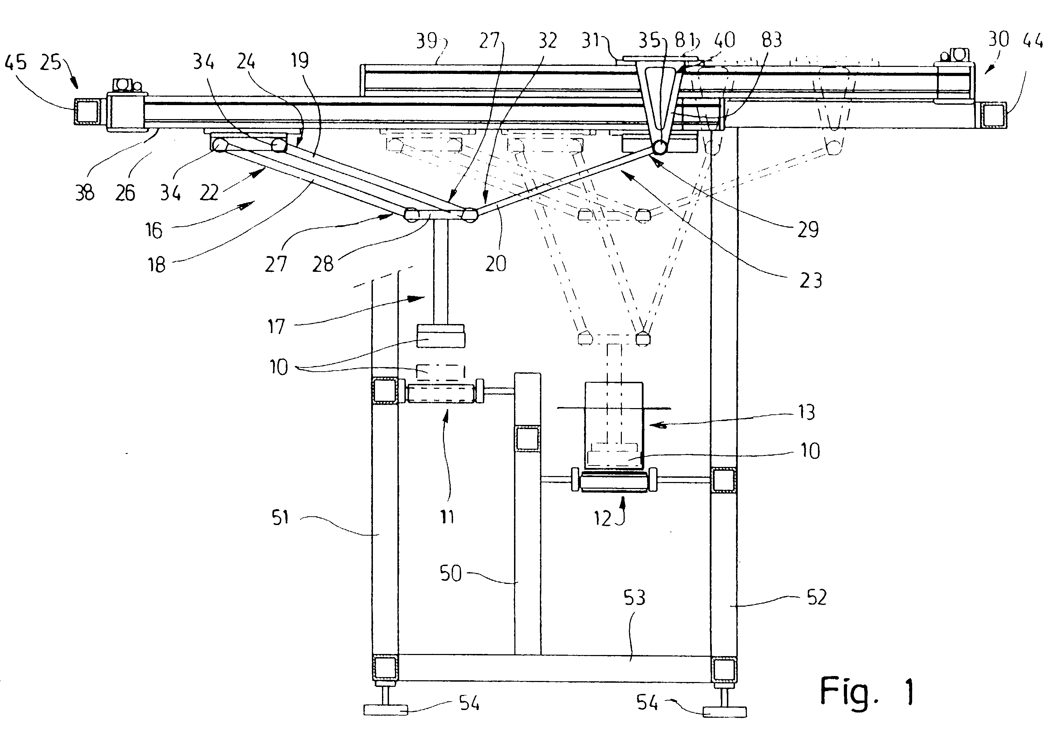

Beim Ausführungsbeispiel gemäß Fig. 1 bis 5 besteht der Ausleger 16 aus mehreren Lenkern bzw. Hebeln. Bei den Hebeln handelt es sich um geradlinig verlaufende Stangen. Konkret verfügt die Vorrichtung gemäß Fig. 1 bis 5 über vier Lenker bzw. Hebel 18, 19, 20, 21. Je zwei Hebel 18, 19 bzw. 20, 21 bilden ein Paar 22, 23 parallel zueinander verlaufender Hebel. Die parallel zueinander angeordneten Hebel 18, 19 des ersten Paars 22 sind mit einem ersten Ende 24 gelenkig an einem Linearantrieb 25, nämlich einem Schlitten 26 des Linearantriebs 25, befestigt. Mit einem zum Ende 24 gegenüberliegenden zweiten Ende 27 sind die Hebel 18, 19 des Paars 22 einerseits über eine Platte 28 gelenkig untereinander sowie über die Platte 28 mit dem Aufnahmekopf 17 verbunden. Die Hebel 20, 21 des zweiten Paars 23 sind ihrerseits mit Enden 29 an einem zweiten, vom ersten Linearantrieb 25 unabhängig steuerbaren Linearantrieb 30, nämlich mit einem Schlitten 31 desselben, verbunden. Mit den zu den Enden 29 gegenüberliegenden Enden 32 sind die Hebel 20, 21 des Paars 23 wiederum einerseits gelenkig miteinander und andererseits mit dem Aufnahmekopf 17 verbunden. Zur Verbindung der Hebel 20, 21 dient die Platte 28. Neben den Hebeln 20, 21 des Paars 23 greifen an der Platte 28 auch die Hebel 18, 19 des Paars 22 an. Die Hebel 18, 19 bzw. 20, 21 der Paare 22, 23 sind demnach an den Enden 27, 32 miteinander sowie mit dem Aufnahmekopf 17 verbunden.

Der oben beschriebene Ausleger 16 verfügt demnach über eine Vielzahl von Gelenken. Mit zwei ersten Gelenken 34 sind die Enden 24 der Hebel 18, 19 des Paars 22 am Schlitten 26 des Linearantriebs 25 befestigt. Dementsprechend sind die Enden 29 der Hebel 20, 21 mit jeweils einem Gelenk 35 am Schlitten 31 des zweiten, unabhängig steuerbaren Linearantriebs 30 befestigt. Die den Linearantrieben 25, 30 zugeordneten Gelenke 34, 35 liegen hierbei in einer Ebene. Mit den zu den Enden 24 bzw. 29 gegenüberliegenden Enden 27 bzw. 32 sind die Hebel 18, 19 bzw. 20, 21 über Gelenke 36, 37 untereinander sowie mit dem Aufnahmekopf 17 verbunden. Auch die dem Aufnahmekopf 17 zugeordneten Gelenke 36, 37 liegen in einer Ebene. Die den Enden 32 der Hebel 20, 21 zugeordneten Gelenke 37 sowie das dem Ende 27 des Hebels 19 zugeordnete Gelenk 36 greifen an einer gemeinsamen Seite 33 der Platte 28 an. Das dem Ende 27 des Hebels 18 zugeordnete Gelenk 36 hingegen ist von der Seite 33 beabstandet und einer gegenüberliegenden Seite der Platte 28 zugeordnet. Von Bedeutung ist weiterhin, daß die Gelenke 36, 37 symmetrisch zu einer Längsmittelachse des Aufnahmekopfs 17 angeordnet sind. Die Gelenke 37 der Hebel 20, 21 sind demnach zu der Längsmittelachse des Aufnahmekopfs 17 mit gleichem Abstand positioniert. Ebenso verfügen die Gelenke 36 der Hebel 18, 19 über einen gleichen Abstand zu der Längsmittelachse des Aufnahmekopfs 17. Hierdurch ist gewährleistet, daß eine Krafteinwirkung auf den Aufnahmekopf ausschließlich in Richtung der Längsmittelachse desselben erfolgt. Insgesamt sind demnach acht Gelenke 34..37 vorgesehen.

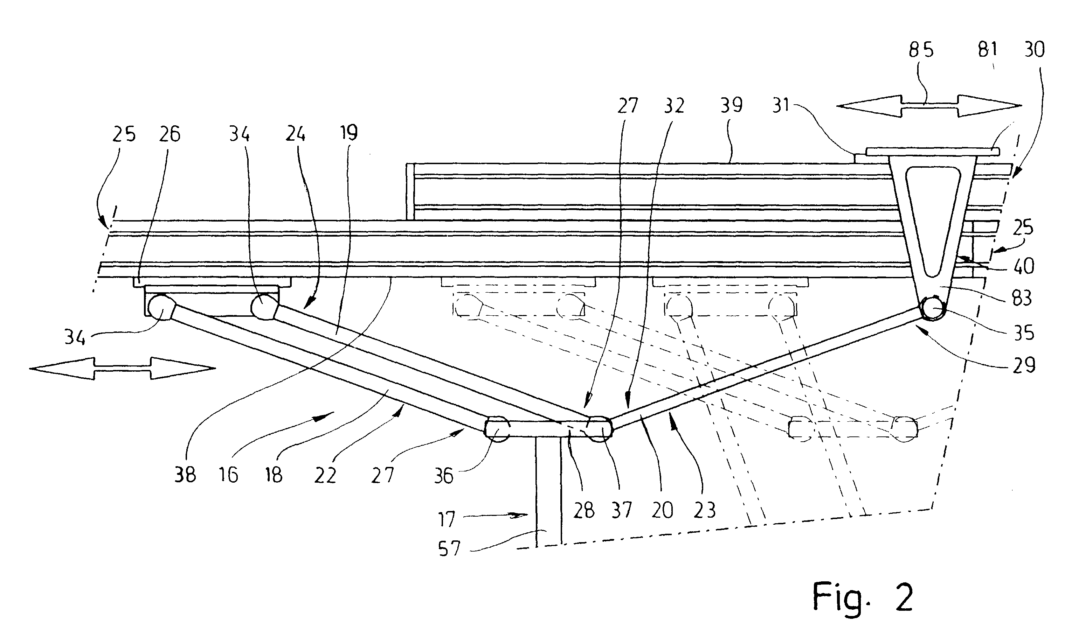

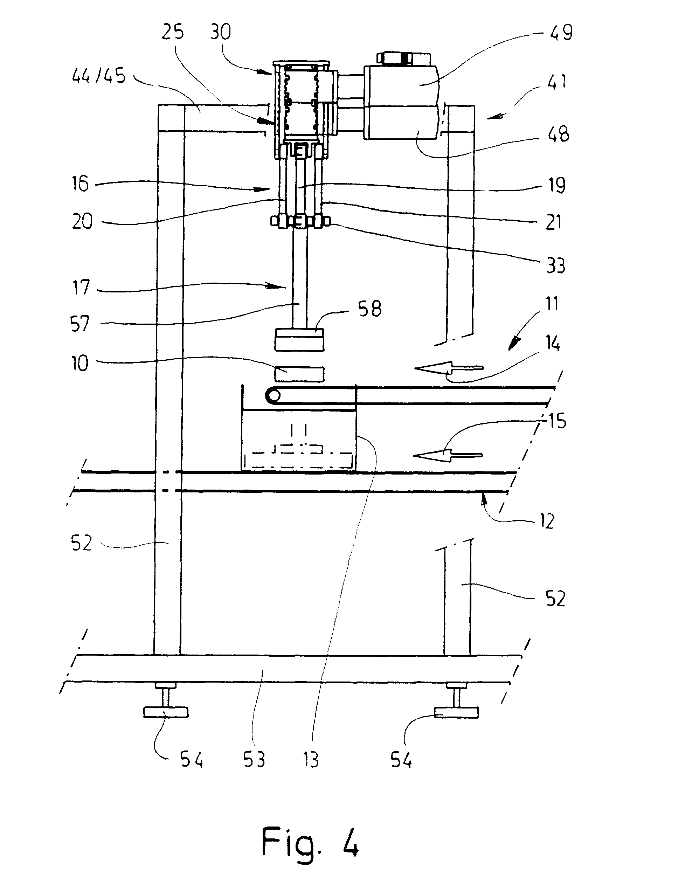

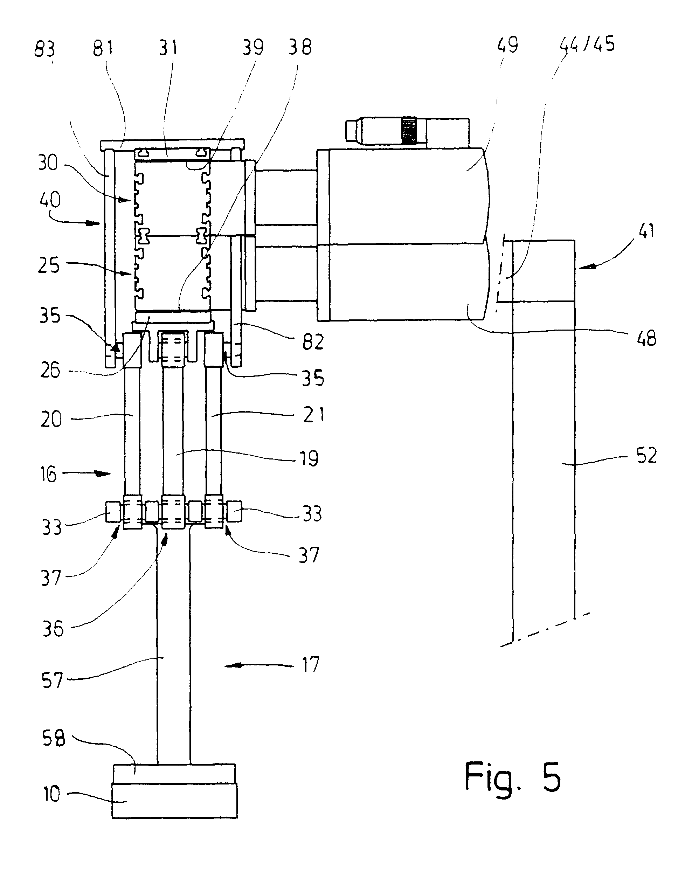

Die jeweils prallel verlaufenden Hebel 18, 19 bzw. 20, 21 jedes Paars 22, 23 liegen in einer Ebene. Die Hebel 18, 19 liegen in der Zeichenebene der Fig. 1, 2 und die Hebel 20, 21 in der Zeichenebene der Fig. 4, 5. Wie Fig. 1, 2 entnommen werden kann, schließen diese Ebenen einen Winkel ein. Die Hebel 20, 21 sind des weiteren gemäß Fig. 5 in der Platte 28 gelagert, benachbart zu den Seiten 33.

Die Linearantriebe 25, 30 sind in der Höhe nach versetzten Ebenen angeordnet, nämlich unmittelbar übereinander. In einem Bereich, in dem Linearantriebe 25, 30 sich überlappen, sind dieselben miteinander verbunden. Darüber hinaus sind die Linearantriebe 25, 30 um 180° versetzt zueinander positioniert. Der Schlitten 26 des Linearantriebs 25 ist demnach an einer Unterseite 38 des Linearantriebs 25 angeordnet, der Schlitten 31 des Linearantriebs 30 hingegen an einer Oberseite 39 des Linearantriebs 30. Über ein seitlich, abwärts gerichtetes Tragorgan 40 sind die Hebel 20, 21 des Paars 23 mit dem Schlitten 31 des Linearantriebs 30 verbunden. Die Gelenke 35 sind dem Tragorgan 40 zugeordnet. Gemäß Fig. 5 ist das Tragorgan 40 im Querschnitt U-förmig ausgebildet, mit einem oberhalb des Schlittens 31 verlaufenden Basisschenkel 81 und zwei abwärts gerichteten Schenkeln 82, 83. Die Schenkel 82, 83 sind von dreieckförmigem Grundriß. Die Gelenke 35 sind einer unteren Spitze der Schenkel 82, 83 zugeordnet.

Durch eine Bewegung der Schlitten 26, 31 der unabhängig voneinander bewegbaren sowie steuerbaren Linearantriebe 25, 30 ist der am Ausleger 16 positionierter Aufnahmekopf 17 beliebig im Raum verfahrbar. Fig. 1 zeigt den Ausleger 16 sowie den Aufnahmekopf 17 in verschiedenen Positionen. In einer ersten Position, die in Fig. 1 mit durchgezogenen Linien dargestellt ist, ist der Aufnahmekopf 17 oberhalb des Zuförderers 11 positioniert. Durch eine Verfahrbewegung der Schlitten 26, 31 der Linearantriebe 25, 30 in derselben Richtung unter Beibehaltung des relativen Abstands der Schlitten 26, 31 zueinander ist der Aufnahmekopf in horizontaler Richtung hin- und herbewegbar. Durch Verfahren der Schlitten 26, 31 relativ zueinander, also durch Verändern des relativen Abstands der Schlitten 26, 31 ist der Aufnahmekopf 17 in vertikaler Richtung hebbar und senkbar. Durch eine Veränderung des relativen Abstands der Schlitten 26, 31 werden nämlich die Hebel 18..21 verschwenkt. Dies bewirkt einerseits, daß sich der von den Hebeln 18, 19 bzw. 20, 21 eingeschlossene Winkel ändert, zum anderen ändert sich der Abstand zwischen den Hebeln 18, 19, während der Abstand zwischen den Hebeln 20, 21 unverändert bleibt. Die Hebel 18, 19 bilden demnach ein Parallelogrammgestänge. Dies bewirkt ein Heben oder Senken des Aufnahmekopfs 17. Fig. 1 zeigt den Aufnahmekopf 17 mit Strichpunkt-Linienführung in einer Position oberhalb des Abförderers 12, die gegenüber der Position des Aufnahmekopfs 17 oberhalb des Zuförderers 11 abgesenkt ist. Dies wird dadurch erreicht, daß der relative Abstand zwischen den Schlitten 26, 31 verringert wird. Durch entsprechende Vergrößerung des raltiven Abstands der Schlitten 26, 31 ist der Aufnahmekopf entsprechend hebbar. Es ist selbstverständlich, daß die oben beschriebenen Bewegungen des Aufnahmekopfs 17 in horizontaler und vertikaler Richtung überlagert werden können. Dies kann unter anderem dadurch erreicht werden, daß die Schlitten 26, 31 der Linearantriebe 25, 30 mit unterschiedlichen Geschwindigkeiten in derselben Richtung verfahren werden. Hierdurch ändert sich automatisch der Relativabstand der Schlitten 26, 31 zueinander bei gleichzeitiger Bewegung derselben in horizontaler Richtung.

In diesem Zusammenhang ist auf die der Höhe nach versetzte Anordnung von Zuförderer 11 und Abförderer 12 von Bedeutung. Durch die nach unten versetzte Anordnung des Abförderers 12 gegen den Zuförderer 11 sind nämlich kürzere und damit schnellere Verfahrbewegungen des Aufnahmekopfs 17 möglich.

Gemäß Fig. 3 sind die Linearantriebe 25, 30 oberhalb des Zuförderers 11 sowie Abförderers 12 an einem gemeinsamen, geschlossenen Rahmen 41 angeordnet. Der Rahmen 41 besteht aus zwei langgezogenen, quer zur Förderrichtung des Zuförderers 11 sowie Abförderers 12 verlaufenden Traversen 42, 43 sowie zwei die Traversen 42, 43 verbindenden Holmen 44, 45. Die Linearantriebe 25, 30 sind jeweils mit einem Ende 46, 47 an den Holmen 44, 45 gelagert und verlaufen ebenso wie die Traversen 42, 43 quer zur Förderrichtung von Zuförderer 11 und Abförderer 12. Die quer zur Förderrichtung von Zuförderer 11 und Abförderer 12 verlaufende Bewegungsrichtung der Linearantriebe 25, 30 ist in Fig. 2 durch einen Doppelpfeil 85 verdeutlicht. Als Servomotoren ausgebildete Antriebsmotoren 48, 49 der Linearantriebe 25, 30 sind aus Stabilitätsgründen in unmittelbarer Nähe zu den Holmen 44, 45 des Rahmens 41 positioniert.

Der Rahmen 31 ruht auf vertikalen Stützen 50, 51, 52. Jeweils zwei Stützen 50 sind zwischen Zuförderer 11 und Abförderer 12 angeordnet, also neben benachbarten Seiten von Zuförderer 11 und Abförderer 12 positioniert. Zu den jeweils anderen Seiten von Zuförderer 11 und Abförderer 12 sind jeweils die zwei Stützen 51 bzw. 52 angeordnet. Der Zuförderer 11 ist demnach seitlich durch die Stützen 51, 50 begrenzt und an diesen gelagert. Der Abförderer 12 ist seitlich durch die Stützen 50, 52 begrentzt und ebenfalls an diesen gelagert. Der Zuförderer 11 endet im Bereich der Linearantriebe 25, 30. Der Abförderer 12 hingegen verläuft durchgehend durch den Bereich der erfindungsgemäßen Vorrichtung. In einem unteren Bereich sind die Stützen 50, 51, 52 zur Stabilisierung derselben durch Holme 53 verbunden. Die durch den Rahmen 41 und die Stützen 50, 51, 52 gebildete Tragkonstruktion für die Linearantriebe 25, 30 einerseits sowie den Ausleger 16 und den daran angeordneten Aufnahmekopf 17 andererseits ruht mit Füßen 54 auf einem Boden, so zum Beispiel einer Maschinenhalle.

Der Rahmen 41 ragt mit seitlichen Enden 55, 56 über die Stützen 50, 51, 52 hinweg. Hierdurch ist gewährleistet, daß trotz eines kleinen kontruktiven Aufbaus der Aufnahmekopf 17 optimal im Raum verfahren werden kann.

Der Aufnahmekopf 17 zur Aufnahme der Gegenstände 10 ist vorzugsweise als Saugorgan ausgebildet und verfügt über zwei funktionell getrennte Bereiche, nämlich einen Schaft 57 sowie einen Saugbereich 58. Der Schaft 57 verbindet den Saugbereich 58 mit der Platte 28 und dient der Aufnahme von Versorgungsleitungen für den Saugbereich 58, nämlich elektrischer und/oder pneumatischer Leitungen (nicht gezeigt). Der sich hieran anschließende Saugbereich 58 verfügt über eine oder mehrere Saugkammern, die mit Unterdruck beaufschlagbar sind und infolge des Unterdrucks Gegenstände 10 erfassen. Der Schaft 57 kann vorzugsweise als Teleskoporgan ausgebildet sein. In diesem Fall ist die Länge des Schafts 57 durch Einfahren und Ausfahren einstellbar. Darüber hinaus ist es denkbar, daß der Aufnahmekopf 17, insbesondere der Saugbereich 58, drehbar ausgebildet ist. Eine Drehachse würde in diesem Fall vorzugsweise mit einer Längsmittelachse des Schafts 57 zusammenfallen.

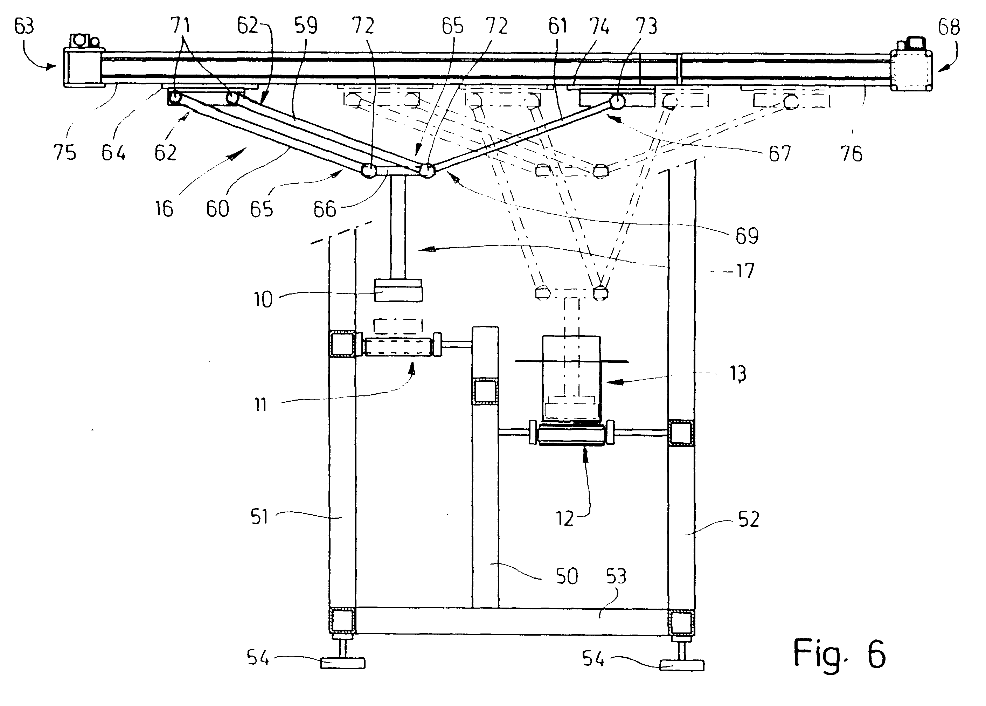

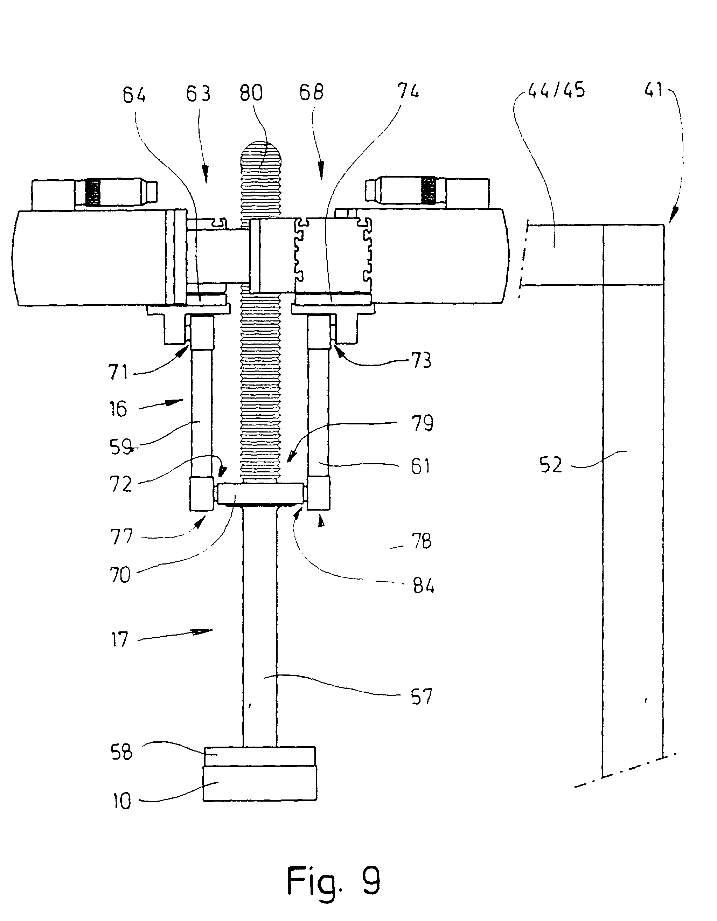

Das zweite Ausführungsbeispiel gemäß Fig. 6 bis 9 entspricht unter anderem hinsichtlich der Ausgestaltung sowie Anordnung von Zuförderer 11, Abförderer 12, Aufnahmekopf 17, Rahmen 41 sowie Stützen 50..52 dem Ausführungsbeispiel gemäß Fig. 1 bis 5. Daher werden für gleiche Baugruppen gleiche Bezugsziffern verwendet. Zur Vermeidung von Wiederholungen wird daher hinsichtlich der konstruktiven Details in Bezug auf diese Baugruppen auf die oben gemachten Ausführungen verwiesen. Unterschiede ergeben sich hinsichtlich der Ausgestaltung und Anordnung des Auslegers und der Linearantriebe. Hierzu:

Der Ausleger 16 des Ausführungsbeispiels gemäß Fig. 6 bis 9 besteht ebenfalls aus mehreren Hebeln, nämlich aus drei Hebeln 59, 60, 61. Zwei Hebel 59, 60 verlaufen parallel zueinander und sind an einem Ende 62 derselben gelenkig mit einem Linearantrieb 63, nämlich einem Schlitten 64 desselben, verbunden. Mit den Enden 62 gegenüberliegenden Enden 65 sind die Hebel 59, 60 einerseits über eine Platte 66 gelenkig miteinander und andererseits mit dem Aufnahmekopf 17 verbunden. Der weitere Hebel 61 ist unter einem Winkel zu den parallel verlaufenden Hebeln 59, 60 angeordnet und mit einem Ende 67 gelenkig mit einem zweiten, unabhängig steuerbaren Linearantrieb 68 verbunden. Mit einem dem Ende 67 gegenüberliegenden Ende 69 ist der Hebel 61 an der Platte 66 gelagert, und zwar an einer Seite 70 der Platte 66, an der ebenfalls der Hebel 59 der parallel zueinander verlaufenden Hebel 59, 60 angreift. Insofern verfügt der Ausleger 16 des Ausführungsbeispiels gemäß Fig. 6 bis 9 über einen Hebel weniger als der Ausleger 16 des Ausführungsbeispiels gemäß Fig. 1 bis 5 und dementsprechend auch über eine geringere Anzahl von Gelenken.

Konkret verfügt der Ausleger 16 des Ausführungsbeispiels gemäß Fig. 6 bis 9 über sechs Gelenke, nämlich zwei Gelenke 71 im Bereich des Schlittens 64 des Linearantriebs 63, zwei Gelenke 72 im Bereich der Platte 66 und zwei den Enden 67, 69 des Hebels 61 zugeordneten Gelenken 73, 84, wobei das Gelenk 84 wiederum der Platte 66 zugeordnet ist.

Die den Linearantrieben 63, 68 zugeordneten Gelenke 71, 73 sind wiederum gemäß dem Ausführungsbeispiel nach Fig. 1 bis 5 in einer Ebene liegend angeordnet. Gleiches gilt für die dem Aufnahmekopf 17 bzw. den Enden 65, 69 der Hebel 59, 60, 61 zugeordneten Gelenke 72, 84. Des weiteren ist von Bedeutung, daß auch beim Ausleger 16 des Ausführungsbeispiels gemäß Fig. 6 bis 9 die Gelenke 72, 84 symmetrisch zu der Längsmittelachse des Aufnahmekopfs 17 angeordnet sind. Die Gelenke 72 der parallel zueinander verlaufenden Hebel 59, 60 sind hierbei mit gleichem Abstand zu der Längsmittelachse des Aufnahmekopfs 17 angeordnet. Des weiteren ist das Gelenk 72 des Hebels 59 und das Gelenk 84 des Hebels 61 derart angeordnet, daß beide Gelenke 72, 84 zu der Längsmittelachse des Aufnahmekopfs 17 einen gleichen Abstand aufweisen. Hierzu sind die Gelenke 72, 84 der Hebel 59, 61 den sich gegenüberliegenden Enden der Seite 70 der Platte 66 zugeordnet. Durch die symmetrische Anordnung der Gelenke 72, 84 der Hebel 59, 60, 61 wird wiederum erreicht, daß eine Krafteinwirkung auf den Aufnahmekopf ausschließlich in Richtung der Längsmittelachse des Aufnahmekopfs 17 erfolgt.

Die parallel zueinander verlaufenden Hebel 59, 60 des Auslegers 16 bilden wiederum ein Parallelogrammgestänge. Bei einer Änderung des relativen Abstands der Linearantriebe 63, 68 werden demnach die parallel zueinander verlaufenden Hebel 59, 60 derart zueinander verschwenkt, daß sich der Abstand zwischen den Hebeln 59, 60 ändert. Hierdurch ist gewährleistet, daß der Aufnahmekopf 17 einerseits in horizontaler Richtung hin- und herbewegbar und andererseits in vertikaler Richtung auf- und abbewegbar ausgebildet ist.

Die Linearantriebe 63, 68 sind im Unterschied zum Ausführungsbeispiel gemäß Fig. 1 bis 5 beim Ausführungsbeispiel gemäß Fig. 6 bis 9 nicht übereinander, sondern nebeneinander angeordnet. Die Linearantriebe 63, 68 verlaufen demnach in einer horizontalen Ebene. Die Schlitten 64, 74 der Linearantriebe 63, 68 sind demnach beide an Unterseiten 75, 76 der Linearantriebe 63, 68 angebracht.

Das Ausführungsbeispiel gemäß Fig. 6 bis 9 verfügt gegenüber dem Ausführungsbeispiel gemäß Fig. 1 bis 5 über den Vorteil, daß die Hebel 59, 61 des Auslegers 16 lediglich an Enden 77, 78 der Seite 70 der Platte 66 angreifen, ein mittlerer Bereich 79 derselben hingegen frei bleibt. Der mittlere Bereich 79 dient in diesem Fall dem Anschluß eines flexiblen Schlauchs 80, mit Hilfe dessen elektrische Versorgungsleitungen und/oder pneumatische Versorgungsleitungen in den Bereich des Aufnahmekopfs 17 bzw. des Schafts 57 geführt werden können.

Hinsichtlich der übrigen konstruktiven Details der Vorrichtung gemäß dem zweiten Ausführungsbeispiel der Erfindung wird auf die Ausführungen zu dem Ausführungsbeispiel gemäß Fig. 1 bis 5 verwiesen.

### Bezugszeichenliste

- 10: Gegenstand
- 11: Zuförderer
- 12: Abförderer
- 13: Verpackung
- 14: Pfeil
- 15: Pfeil
- 16: Ausleger
- 17: Aufnahmekopf
- 18: Hebel
- 19: Hebel
- 20: Hebel
- 21: Hebel
- 22: Paar
- 23: Paar
- 24: Ende
- 25: Linearantrieb
- 26: Schlitten
- 27: Ende
- 28: Platte
- 29: Ende
- 30: Linearantrieb
- 31: Schlitten
- 32: Ende
- 33: Seite
- 34: Gelenk
- 35: Gelenk
- 36: Gelenk
- 37: Gelenk
- 38: Unterseite
- 39: Oberseite
- 40: Tragorgan
- 41: Rahmen
- 42: Traverse
- 43: Traverse
- 44: Holm
- 45: Holm
- 46: Ende
- 47: Ende
- 48: Antriebsmotor
- 49: Antriebsmotor
- 50: Stütze
- 51: Stütze
- 52: Stütze
- 53: Holm
- 54: Fuß
- 55: Ende
- 56: Ende
- 57: Schaft
- 58: Saugbereich
- 59: Hebel
- 60: Hebel
- 61: Hebel
- 62: Ende
- 63: Linearantrieb
- 64: Schlitten
- 65: Ende
- 66: Platte
- 67: Ende
- 68: Linearantrieb
- 69: Ende
- 70: Seite
- 71: Gelenk
- 72: Gelenk
- 73: Gelenk
- 74: Schlitten
- 75: Unterseite
- 76: Unterseite
- 77: Ende
- 78: Ende
- 79: Bereich
- 80: Schlauch
- 81: Basisschenkel
- 82: Schenkel
- 83: Schenkel
- 84: Gelenk
- 85: Doppelpfeil

## Patentansprüche

1. Vorrichtung zum Handhaben von Gegenständen (10) im Zusammenhang mit dem Verpacken derselben, mit einem an einem Ausleger (16) angeordneten Aufnahmekopf (17) zum Aufnehmen mindestens eines Gegenstands (10) von einer Bereitstellungsebene, insbesondere von einem Zuförderer (11) und zum Übergeben des Gegenstands (10) an eine Aufnahmeebene, insbesondere an eine auf einem Abförderer (12) positionierte Verpackung (13) für den Gegenstand, wobei der Ausleger (16) aus Hebeln besteht, nämlich aus zwei parallelen Hebeln (18, 19; 59, 60), die mit einem in oberer, horizontaler Ebene hin- und herverfahrbaren ersten Schlitten (26, 64) gelenkig verbunden sind sowie aus einem weiteren, unter einem Winkel angeordneten Hebel (20, 61), der mit einem anderen unabhängig von dem ersten hin- und herbewegbaren Schlitten (31, 74) gelenkig verbunden ist und wobei weiterhin die parallelen Hebel (18, 19; 59, 60) über mit Abstand voneinander angeordnete Gelenke (36, 72) mit einer Koppel (28,66) verbunden sind, an der der Aufnahmekopf (17) angebracht ist, derart, dass durch Verfahren der Schklitten der Aufnahmekopf in vertikaler Richtung heb- und senkbar sowie in horizontaler Richtung hin- und herbewegbar ist, **gekennzeichnet durch** folgende Merkmale:
a) je ein Schlitten (26, 31; 64, 74) ist mit einem Linearantrieb (25, 30; 63, 68) verbunden,
b) die beiden parallelen Linearantriebe (25, 30; 63, 68) sind ortsfest, nebeneinander oder übereinander, angeordnet,
c) die beiden parallelen Hebel (18, 19; 59, 60) und der unter einem Winkel zu diesen angeordnete Hebel (20, 21; 61) sind jeweils mit einer die Koppel bildenden Platte (28, 66) gelenkig verbunden,
d) der unter einem Winkel zu den parallelen Hebeln (18, 19; 59, 60) angeordnete Hebel (20, 21; 61) ist mit der Platte (28, 66) über ein Gelenk (37, 84) verbunden, das gleichachsig mit dem Gelenk (36) des einen Hebels (19, 59) der parallelen Hebel (18, 19; 59, 60) positioniert ist.

2. Vorrichtung nach Anspruch 1, **dadurch gekennzeichnet**, dass die Linearantriebe (63, 68) in einer horizontalen Ebene nebeneinanderliegend angeordnet und die Schlitten (64, 74) an einer Unterseite (75, 76) der Linearantriebe (63, 68) angebracht sind.

3. Vorrichtung nach Anspruch 1, **dadurch gekennzeichnet,** dass die Linearantriebe (25, 30) übereinander angeordnet sind, wobei der Schlitten (26) des unteren Linearantriebs (25) an einer Unterseite (38) und der Schlitten (31) des oberen Lineartriebs (30) an einer Oberseite (39) des jeweiligen Linearantriebs (25, 30) angeordnet und über seitliche, abwärts gerichtete Tragorgane (40) mit mindestens einem Hebel (20, 21) des Auslegers (16) verbunden ist.

4. Vorrichtung nach Anspruch 1 oder einem der weiteren Ansprüche, **dadurch gekennzeichnet,** dass die der Platte (66) zugeordneten Gelenke (72) der beiden parallelen Hebel (59, 60) an einer Seite (70) der Platte (66) und das entsprechende Gelenk (84) des unter einem Winkel gerichteten Hebels (61) mit der gegenüberliegenden Seite der Platte (66) verbunden ist.

5. Vorrichtung nach Anspruch 1, **dadurch gekennzeichnet**, dass die beiden parallelen Hebel (18, 19) mittig zur Platte (28) über das entsprechend angeordnete Gelenk (36) mit der Platte (28) verbunden sind und dass zwei unter einem Winkel hierzu angeordnete Hebel (20, 21) an einander gegenüberliegenden Seiten jeweils über Gelenke (37) mit der Platte (28) verbunden sind, wobei die Gelenke (36 und 37) gleichachsig positioniert sind.

6. Vorrichtung nach Anspruch 1 oder einem der weiteren Ansprüche, **dadurch gekennzeichnet,** dass der Aufnahmekopf (17) mittig an der Platte (28, 66) angebracht ist, insbesondere mit einem aufrechten Schaft (57), an dem ein Saugorgan (58) angeordnet ist.

7. Vorrichtung nach einem oder mehreren der Ansprüche 1 bis 6, **dadurch gekennzeichnet,** dass die Linearantriebe (25, 30; 63, 68) an einem oberhalb des Zuförderers (11) und Abförderers (12) angeordneten Rahmen (41) derart befestigt sind, dass die Schlitten (26, 31; 64, 74) der Linearantriebe (25, 30; 63, 68) quer zur Förderrichtung des Zuförderers (11) und Abförderers (12) hin- und herbewegbar sind.

8. Vorrichtung nach Anspruch 7, **dadurch gekennzeichnet,** dass der Rahmen (41) an vertikalen Stützen (50, 51, 52) gelagert ist, die seitlich neben dem Zuförderer (11) und Abförderer (12) verlaufen und über die der Rahmen (41) mit seitlichen Enden (55, 56) hinwegragt.

9. Vorrichtung nach einem oder mehreren der Ansprüche 1 bis 8, **dadurch gekennzeichnet,** dass Zuförderer (11) und Abförderer (12) nebeneinander und in der Höhe versetzt zueinander angeordnet sind, wobei die Förderrichtungen von Zuförderer (11) und Abförderer (12) parallel zueinander verlaufen.

## Claims

1. Apparatus for handling articles (10) in conjunction with the packaging of the same, having a receiving head (17) which is arranged on an extension arm (16) and is intended for receiving at least one article (10) from a supply plane, in particular from a feed conveyor (11), and for transferring the article (10) to a receiving plane, in particular to a pack (13) which is positioned on a removal conveyor (12) and is intended for the article, it being the case that the extension arm (16) comprises levers, specifically two parallel levers (18, 19; 59, 60) which are connected in an articulated manner to a first carriage (26, 64) which can be displaced back and forth in a top horizontal plane, and comprises a further lever (20, 61), arranged at an angle, which is connected in an articulated manner to another carriage (31, 74) which can be moved back and forth independently of the first carriage, and it also being the case that the parallel levers (18, 19; 59, 60) are connected via articulations (36, 72) which are arranged spaced apart from one another to a coupling link (28, 66) on which the receiving head (17) is fitted such that by virtue of the carriages being displaced the receiving head can be raised and lowered in the vertical direction and moved back and forth in the horizontal direction, characterized by the following features:
a) in each case one carriage (26, 31; 64, 74) is connected to a linear drive (25, 30; 63, 68),
b) the two parallel linear drives (25, 30; 63, 68) are arranged in a fixed location one beside the other or one above the other.
c) the two parallel levers (18, 19; 59, 60) and the levers (20, 21; 61) arranged at an angle to these are in each case connected in an articulated manner to a plate (28, 66) forming the coupling link,
d) the lever (20, 21; 61) arranged at an angle to the parallel levers (18, 19; 59, 60) is connected to the plate (28, 66) via an articulation (37, 84), which is positioned on the same axis as the articulation (36) of the one lever (19, 59) of the parallel levers (18, 19; 59, 60).

2. Apparatus according to Claim 1, characterized in that the linear drives (63, 68) are arranged one beside the other in one horizontal plane and the carriages (64, 74) are provided on an underside (75, 76) of the linear drives (63, 68).

3. Apparatus according to Claim 1, characterized in that the linear drives (25, 30) are arranged one above the other, it being the case that the carriage (26) of the bottom linear drive (25) is arranged on an underside (38), and the carriage (31) of the top linear drive (30) is arranged on a top side (39), of the respective linear drive (25, 30) and is connected to at least one lever (20, 21) of the extension arm (16) via lateral, downwardly directed carrying elements (40).

4. Apparatus according to Claim 1 or one of the further claims, characterized in that the articulations (72) assigned to the plate (66) and belonging to the two parallel levers (59, 60) are connected to one side (70) of the plate (66), and the corresponding articulation (84) of the lever (61) oriented at an angle is connected to the opposite side of the plate (66).

5. Apparatus according to Claim 1, characterized in that the two parallel levers (18, 19) are connected to the plate (28) centrally with respect to the plate (28) via the appropriately arranged articulation (36), and that two levers (20, 21) arranged at an angle to the said plate are connected to the plate (28) on mutually opposite sides, in each case via articulations (37), the articulations (36 and 37) being positioned on the same axis.

6. Apparatus according to Claim 1 or one of the further claims, characterized in that the receiving head (17) is fitted centrally to the plate (28, 66), in particular to an upright shank (57) on which a suction element (58) is arranged.

7. Apparatus according to one or more of Claims 1 to 6, characterized in that the linear drives (25, 30; 63, 68) are fastened on a frame (41), which is arranged above the feed conveyor (11) and removal conveyor (12), such that the carriages (26, 31; 64, 74) of the linear drives (25, 30; 63, 68) can be moved back and forth transversely to the conveying direction of the feed conveyor (11) and removal conveyor (12).

8. Apparatus according to Claim 7, characterized in that the frame (41) is mounted on vertical supports (50, 51, 52) which run laterally alongside the feed conveyor (11) and removal conveyor (12) and beyond which the frame (41) projects by way of lateral ends (55, 56).

9. Apparatus according to one or more of Claims 1 to 8, characterized in that the feed conveyor (11) and removal conveyor (12) are arranged one beside the other and in a vertically offset manner in relation to one another, it being the case that the conveying directions of the feed conveyor (11) and removal conveyor (12) run parallel to one another.

## Revendications

1. Dispositif de manipulation d'objets (10) en rapport avec l'emballage de ceux-ci, comportant une tête réceptrice (17) placée sur un bras (16) et destinée à recevoir au moins un objet (10) d'un plan de mise à disposition, en particulier d'un transporteur d'amenée (11), et à transmettre cet objet (10) à un plan de réception, en particulier à un emballage (13) pour l'objet placé sur un transporteur d'évacuation (12), le bras (16) étant constitué de leviers, à savoir de deux leviers parallèles (18, 19 ; 59, 60) qui sont joints de manière articulée à un premier chariot (26, 64) pouvant aller et venir dans un plan horizontal supérieur, ainsi que d'un autre levier (20, 61) faisant un angle avec les précédents qui est joint de manière articulée à un autre chariot (31, 74) pouvant aller et venir indépendamment du premier, et en outre, les leviers parallèles (18, 19 ; 59, 60) étant joints par des articulations espacées (36, 72) à un élément d'accouplement (28, 66) sur lequel est montée la tête réceptrice (17), de façon telle que par déplacement des chariots, la tête réceptrice puisse monter et descendre dans la direction verticale et aller et venir dans la direction horizontale, caractérisé par les caractéristiques suivantes :
a) chaque chariot (26, 31 ; 64, 74) est lié à un dispositif moteur linéaire (25, 30 ; 63, 68),
b) les deux dispositifs moteurs linéaires, parallèles (25, 30 ; 63, 68) sont montés fixes l'un à côté de l'autre ou l'un au-dessus de l'autre,
c) les deux leviers parallèles (18, 19 ; 59, 60) et le levier (20, 21 ; 61) faisant un angle avec ceux-ci sont joints chacun de manière articulée à une plaque (28, 66) formant l'élément d'accouplement,
d) le levier (20, 21 ; 61) faisant un angle avec les leviers parallèles (18, 19 ; 59, 60) est joint à la plaque (28, 66) par une articulation (37, 84) qui est coaxiale avec l'articulation (36) d'un (19, 59) des leviers parallèles (18, 19 ; 59, 60).

2. Dispositif selon la revendication 1, caractérisé par le fait que les dispositifs moteurs linéaires (63, 68) sont placés l'un à côté de l'autre dans un plan horizontal et les chariots (64, 74) sont montés sur un côté inférieur (75, 76) des dispositifs moteurs linéaires (63, 68).

3. Dispositif selon la revendication 1, caractérisé par le fait que les dispositifs moteurs linéaires (25, 30) sont placés l'un au-dessus de l'autre, le chariot (26) du dispositif moteur linéaire inférieur (25) étant placé sur un côté inférieur (38) de ce dernier (25) et le chariot (31) du dispositif moteur linéaire (30) étant placé sur un côté supérieur (39) de ce dernier (30) et relié par des organes supports latéraux dirigés vers le bas (40) à au moins un levier (20, 21) du bras (16).

4. Dispositif selon la revendication 1 ou une des autres revendications, caractérisé par le fait que les articulations (72) des deux leviers parallèles (59, 60) associées à la plaque (66) sont jointes à un côté (70) de la plaque (66) et l'articulation correspondante (84) du levier faisant un angle (61) est jointe au côté opposé de la plaque (66).

5. Dispositif selon la revendication 1, caractérisé par le fait que les deux leviers parallèles (18, 19) sont joints à la plaque (28) au milieu de celle-ci par l'articulation placée de façon correspondante (36), et que deux leviers (20, 21) faisant un angle avec les précédents sont joints à la plaque (28) sur des côtés opposés, chacun par une articulation (37), les articulations (36 et 37) étant coaxiales.

6. Dispositif selon la revendication 1 ou une des autres revendications, caractérisé par le fait que la tête réceptrice (17) est montée au milieu sur la plaque (28, 66), en particulier par une tige verticale (57) dans laquelle est placé un organe d'aspiration (58).

7. Dispositif selon une ou plusieurs des revendications 1 à 6, caractérisé par le fait que les dispositifs moteurs linéaires (25, 30 ; 63, 68) sont fixés à un cadre (41), placé au-dessus du transporteur d'amenée (11) et du transporteur d'évacuation (12), de façon telle que les chariots (26, 31 ; 64, 74) des dispositifs moteurs linéaires (25, 30 ; 63, 68) puissent aller et venir perpendiculairement à la direction de transport du transporteur d'amenée (11) et du transporteur d'évacuation (12).

8. Dispositif selon la revendication 7, caractérisé par le fait que le cadre (41) est monté sur des supports verticaux (50, 51, 52) qui s'étendent latéralement près du transporteur d'amenée (11) et du transporteur d'évacuation (12) et d'où le cadre (41) dépasse par des extrémités latérales (55, 56).

9. Dispositif selon une ou plusieurs des revendications 1 à 8, caractérisé par le fait que le transporteur d'amenée (11) et le transporteur d'évacuation (12) sont placés l'un à côté de l'autre et décalés en hauteur, les directions de transport du transporteur d'amenée (11) et du transporteur d'évacuation (12) étant parallèles.
